# EUROPEAN PATENT SPECIFICATION

(11) **EP 4 331 899 B1**
(45) Date of publication and mention of the grant of the patent: **30.07.2025**
(21) Application number: 23189959.2
(22) Date of filing: 07.08.2023
(51) Int. Cl.: B60L 53/00

(54) **CHARGING PILE, ELECTRIC DEVICE, CHARGING SYSTEM, AND BATTERY PACK HEATING METHOD**
LADESÄULE, ELEKTRISCHE VORRICHTUNG, LADESYSTEM UND VERFAHREN ZUR ERWÄRMUNG EINES BATTERIEPACKS
PILE DE CHARGE, DISPOSITIF ÉLECTRIQUE, SYSTÈME DE CHARGE ET PROCÉDÉ DE CHAUFFAGE DE BLOC-BATTERIE

(30) Priority: 02.09.2022 CN 202211071112
(43) Date of publication of application: 06.03.2024
(73) Proprietor: Huawei Digital Power Technologies Co., Ltd., Shenzhen, Guangdong 518043 (CN)
(72) Inventor: CHENG, Dong, Shenzhen, 518043 (CN); HU, Minggui, Shenzhen, 518043 (CN)
(74) Representative: Isarpatent

(56) References cited:
- CN-A- 113 752 888
- US-A1- 2022 239 121

## Description

### TECHNICAL FIELD

This application relates to the field of new energy vehicles, and more specifically, to a charging pile, a charging system, and a battery pack heating method.

### BACKGROUND

A battery pack is a very important component in a new energy vehicle. Currently, the most widely used battery pack in the new energy vehicle is a lithium-ion battery. However, lithium ions are very sensitive to a temperature. When a temperature of the battery pack decreases with an external temperature, activity of the lithium ions in the battery pack also decreases accordingly. Consequently, charging and discharging performance of the battery pack is reduced. In a serious case, lithium plating may occur at a low temperature, which affects a cycle life and safety of the battery pack. Therefore, a method is required to heat the battery pack to enable the battery pack to still maintain a relatively appropriate operating temperature when the external temperature is excessively low.

Therefore, a solution is expected to be provided to heat the battery pack to enable the battery pack to work at an appropriate temperature.
US 2022/0239121 A1 describes a charging method. The method comprises acquiring a state parameter of a traction battery, the state parameter including a battery temperature; sending first charging mode demand information to a charging pile when the battery temperature is lower than a first preset threshold, where the first charging mode demand information is used for indicating a pulse charging mode, the pulse charging mode is a charging mode using a pulsed voltage or a pulsed current, and the pulsed voltage or the pulsed current is used for charging the traction battery.
CN 113 752 888 A describes a battery energy processing method and device, and a vehicle. The method comprises steps that when a charging instruction is received, a battery heating state of the vehicle is determined; according to the battery heating state of the vehicle, a target charging mode is selected from multiple preset charging modes, and multiple preset charging modes comprise a normal process charging mode and a small-current voltage-stabilizing charging mode; and if the selected target charging mode is the low-current voltage-stabilizing charging mode, a first charging demand is sent to a charging pile so that the charging pile outputs current to charge the battery according to the first charging demand.

### SUMMARY

An object of the invention is to provide a charging pile, a charging system, and a battery pack heating method, to heat the battery pack and enable the battery pack to work at an appropriate temperature. This object is solved by the subject-matter of the independent claims. Further, embodiments are set out in the dependent claims.

### BRIEF DESCRIPTION OF DRAWINGS

FIG. 1 is a schematic diagram of a scenario applicable to a battery pack heating method according to an embodiment of this application;
FIG. 2 is an architectural diagram of a charging system applicable to an embodiment of this application;
FIG. 3 is a schematic flowchart of a battery pack heating method according to an embodiment of this application;
FIG. 4 is a schematic diagram of a possible architecture of a charging pile according to an embodiment of this application;
FIG. 5 is a possible schematic flowchart of a battery pack heating method according to an embodiment of this application;
FIG. 6 is a schematic diagram in which a current value changes with time when a battery pack is heated according to an embodiment of this application;
FIG. 7 is a schematic diagram in which a current value changes with time when a battery pack is heated while being charged according to an embodiment of this application;
FIG. 8 is a schematic diagram of another possible architecture of a charging pile according to an embodiment of this application;
FIG. 9 is another possible schematic flowchart of a battery pack heating method according to an embodiment of this application;
FIG. 10 is a schematic block diagram of an apparatus for heating a battery pack according to an embodiment of this application;
FIG. 11 is a schematic block diagram of another apparatus for heating a battery pack according to an embodiment of this application; and
FIG. 12 is another schematic block diagram of an apparatus for heating a battery pack according to an embodiment of this application.

### DESCRIPTION OF EMBODIMENTS

The technical solutions in this application are described below with reference to the accompanying drawings.

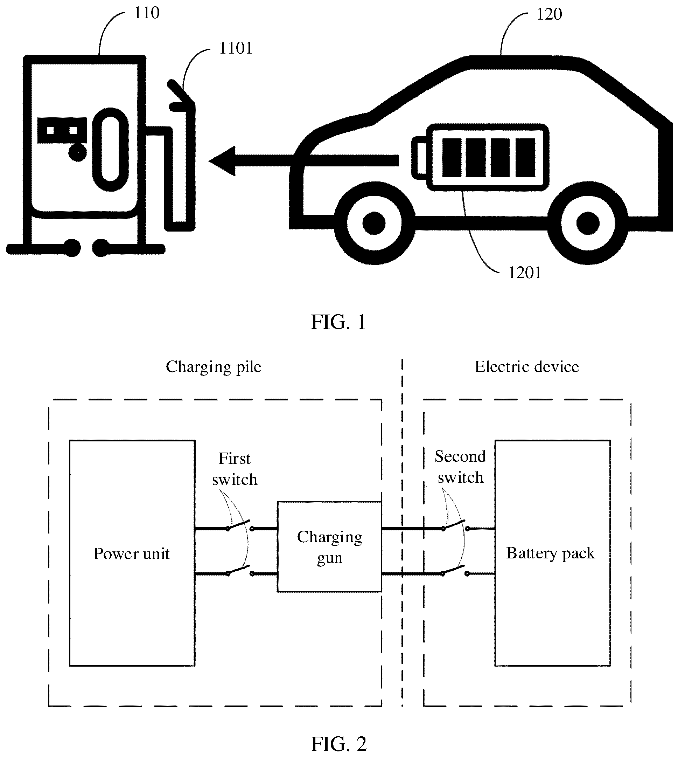

FIG. 1 is a schematic diagram of a scenario applicable to a battery pack heating method according to an embodiment of this application. As shown in FIG. 1, the scenario shows a charging pile 110 and an electric device 120. The charging pile 110 is connected to a power grid by using a cable, and obtains electric energy from the power grid. The charging pile 110 includes a charging gun 1101, and may charge the electric device 120 by using the charging gun 1101. The electric device includes a battery pack 1201. The electric device 120 is connected to the charging gun 1101 through a charging interface, and obtains electric energy. The electric device 120 stores the obtained electric energy in the battery pack 1201 for use.

The electric device 120 may be, for example, a new energy vehicle shown in FIG. 1, or may be another device that uses electric energy as a power source, for example, including but not limited to an electric motorcycle, an electric bicycle, an electric skateboard, an electric ship, an electric aircraft, an electric flight vehicle, an electric lawn mower, an electric construction device, a tram, a golf cart, or an electric train. This is not limited in this application.

When the foregoing device that uses electric energy as a power source is used in an environment with an excessively low temperature, a temperature of the battery pack decreases with an external temperature. However, currently used battery packs are mainly lithium-ion batteries. Lithium ions are very sensitive to a temperature, and activity of the lithium ions also decreases accordingly. Consequently, charging and discharging performance of the battery pack is reduced. In a serious case, lithium plating may occur at a low temperature, which affects a cycle life and safety of the battery pack. Therefore, a method needs to be provided to heat the battery pack to enable the battery pack to still maintain a relatively appropriate operating temperature when the external temperature is excessively low.

In view of this, this application provides a battery pack heating method. The charging pile controls a power unit in the charging pile to repeatedly charge and discharge the battery pack, and heat is generated by a current that repeatedly flows into and out of the battery pack due to internal resistance of the battery pack to heat the battery pack, so that the battery pack reaches an appropriate operating temperature. In this way, the battery pack of the electric device may be heated by using an existing charging pile architecture. A structure of the electric device does not need to be changed, no new structure needs to be added, and no cost is increased. In addition, the battery pack is heated by using the heat generated when the current flows into and out of the battery pack due to the internal resistance. In this way, heating is relatively uniform, and heating effect is relatively good.

FIG. 2 is a schematic diagram of a charging system applicable to a battery pack heating method according to an embodiment of this application. As shown in FIG. 2, the system includes a charging pile and an electric device. The charging pile includes a power unit and a charging gun, and the electric device includes a battery pack.

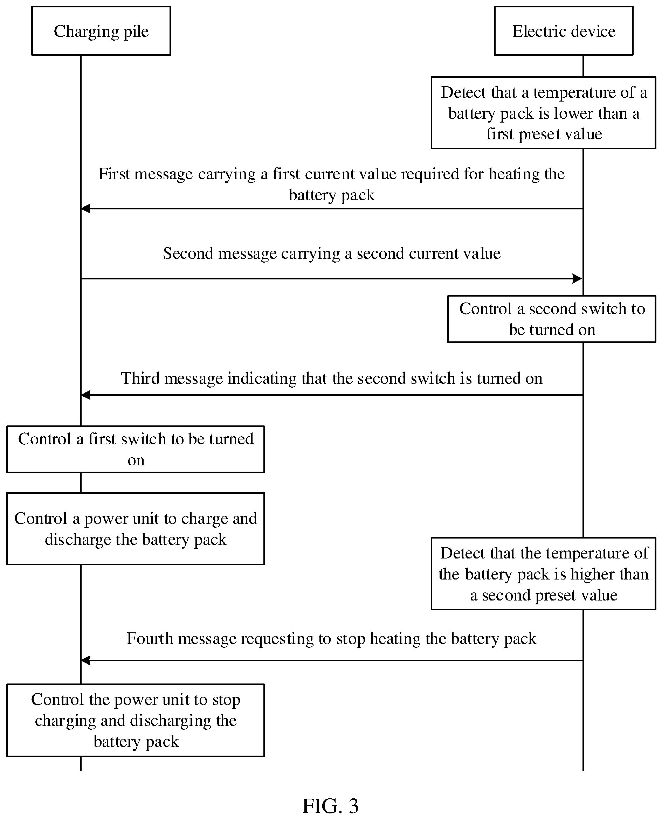

Based on the system architecture provided in FIG. 2, this application provides a battery pack heating method. FIG. 3 is a schematic flowchart of a battery pack heating method according to an embodiment of this application. The following describes in detail a battery pack heating method with reference to FIG. 3.

An electric device may continuously detect a temperature of a battery pack. When the temperature of the battery pack is lower than a first preset value and the battery pack needs to be heated, the electric device sends a first message to a charging pile. The charging pile receives the first message from the electric device. The first message carries a first current value required for heating the battery pack of the electric device. After receiving the first message, the charging pile controls a power unit to charge and discharge the battery pack, to heat the battery pack.

Alternatively, in another implementation, the charging pile actively detects the temperature of the battery pack in the electric device. When the temperature of the battery pack is lower than the first preset value, it is determined that the battery pack needs to be heated.

As described above, in a process of heating the battery pack, the power unit heats the battery pack by using heat generated by the battery pack due to the internal resistance during frequent switching between charging and discharging. A current value used when the battery pack is charged is determined based on the first current value. Because a capability range of the charging pile may not include the first current value, a current value (for example, denoted as a second current value) output when the charging pile heats the battery pack may not be greater than the first current value. In other words, the first current value carried in the first message may be considered as a maximum current value allowed by the battery pack of the electric device, and the charging pile may determine, within a range not greater than the first current value, the second current value used to heat the battery pack.

After determining the second current value, the charging pile may send a second message that carries the second current value to the electric device, to notify that the charging pile can heat the battery pack and to notify the second current value.

Optionally, the first message further carries a voltage value and/or a frequency value required for heating the battery pack. The voltage value herein is a voltage output when the charging pile heats the battery pack. The frequency value is a frequency at which the charging pile and the battery pack switch between charging and discharging. Usually, the charging pile directly heats the battery pack based on the voltage value and/or the frequency value carried in the first message, and does not need to re-determine, based on the first message, the voltage value and/or the frequency value used for heating the battery pack.

Alternatively, the electric device does not indicate, to the charging pile, the voltage value and the frequency value that are required for heating the battery pack. The charging pile may input a current to a heating pack based on a preset voltage value, or may charge and discharge the battery pack based on a preset frequency value. For example, the preset voltage value and the preset frequency value may be a voltage value and a frequency value that are defined in a standard. This is not limited in this application.

In this charging system, a first switch is connected between the power unit and a charging gun in the charging pile, and a second switch is connected between the battery pack in the electric device and the charging pile. For safety purposes, the charging pile turns on the first switch to power on the charging gun only after the second switch is turned on, that is, after the charging pile is connected to the battery pack. In a possible implementation, after the second switch is turned on, the electric device may send a third message to the charging pile to indicate that the second switch is turned on, and the charging pile may control the first switch to be turned on only after receiving the third message.

When the battery pack of the electric device does not have a heating requirement, for example, when the temperature of the battery pack is higher than a second preset value or when a user actively stops heating, the electric device may send a fourth message to the charging pile to request to stop heating the battery pack. The second preset value may be the same as or different from the first preset value. For example, the second preset value is greater than the first preset value. This is not limited in this application. After receiving the fourth message, the charging pile controls the power unit to stop charging and discharging the battery pack, that is, stop heating.

When the electric device does not have the heating requirement, the electric device may further have a charging requirement. After the charging pile stops heating the battery pack, if the electric device still has the charging requirement, the power unit may be controlled to charge the battery pack; or if the electric device does not have the charging requirement, the power unit may be controlled to stop working.

As an example only, there may be two possible architectures for a charging pile applicable to a battery pack heating method provided in this embodiment of this application. The following separately describes the two possible architectures in detail.

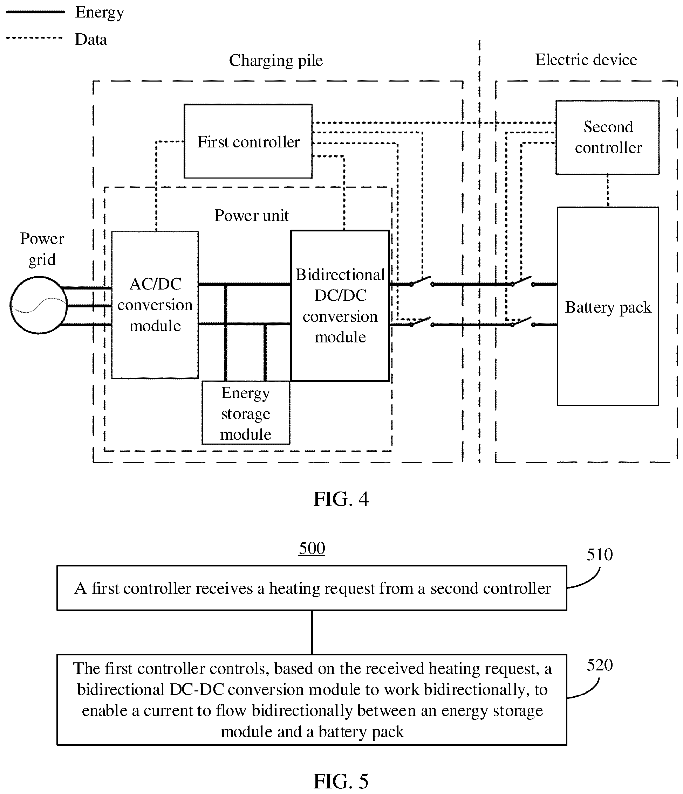

FIG. 4 is a schematic diagram of a possible architecture of a charging pile according to an embodiment of this application. As shown in FIG. 4, the system includes a charging pile and an electric device. The charging pile includes a power unit and a first controller. The power unit includes an AC-DC conversion module, a bidirectional DC-DC conversion module, and an energy storage module. The electric device includes a battery pack and a second controller. The first controller is a module configured to perform a control function in the charging pile. The second controller is a module configured to perform a control function in the electric device.

FIG. 4 is only an example, and does not show all of the charging pile and the electric device. For example, the charging pile and the electric device each further include a charging interface. The charging interface of the charging pile may be connected to a charging gun. The battery pack in the electric device may be connected to the charging interface by using a cable. During charging, a current may flow through the charging gun through the charging interface of the charging pile, then flow into the charging port of the electric device, and flow into the battery pack, thereby charging the electric device. The following describes in detail the modules in FIG. 4 and connection relationships of the modules.

In the charging pile shown in FIG. 4, the AC-DC conversion module is connected to a power grid, obtains electric energy from the power grid, and converts an alternating current of the power grid into a direct current when the AC-DC conversion module works. The AC-DC conversion module may be a unidirectional AC-DC conversion module, or may be a bidirectional AC-DC conversion module. If the AC-DC conversion module is a bidirectional AC-DC conversion module, in this embodiment, the bidirectional AC-DC conversion module may also be kept in a unidirectional working state, to prevent the electric energy from flowing back to the power grid.

The bidirectional DC-DC conversion module is connected between the AC-DC conversion module and the charging gun. It may be understood that the DC-DC conversion module may convert a direct current on one side into a direct current on the other side and may change a voltage of the direct current. In this embodiment of this application, the bidirectional DC-DC conversion module is used. The bidirectional DC-DC conversion module may switch between unidirectional and bidirectional working. A function of the bidirectional DC-DC conversion module may be implemented by using two unidirectional DC-DC converters, or may be implemented by using a resonant LLC circuit or a buck boost circuit. This is not limited in this application.

In a possible design, the bidirectional DC-DC conversion module includes a metal-oxide-semiconductor (metal-oxide-semiconductor, MOS) transistor or an insulated gate bipolar transistor (insulated gate bipolar transistor, IGBT).

The energy storage module is connected in parallel to a direct current bus between the AC-DC conversion module and the bidirectional DC-DC conversion module, and may be configured to store and release the electric energy. The energy storage module may be in a form of a capacitor, an energy storage battery, or the like. This is not limited in this application.

The first controller is communicatively connected to the bidirectional DC-DC conversion module and the AC-DC conversion module, and may control the AC-DC conversion module and the bidirectional DC-DC conversion module to work. In addition, the first controller may establish a communication connection to the second controller by using the charging gun and through the charging interface, and send a request to the second controller.

The first controller may be configured to control each module in the charging pile. In this embodiment, the first controller may be communicatively connected to the bidirectional DC-DC conversion module, and control the bidirectional DC-DC conversion module to switch between unidirectional and bidirectional working. The first controller may also be communicatively connected to the AC-DC conversion module, and control the AC-DC conversion module to work or not to work. The first controller may also be communicatively connected to a switch in the charging pile, and control the switch in the charging pile to be turned on or off.

In the electric device shown in FIG. 4, the second controller may be configured to control each module in the electric device. In this embodiment, the second controller may be communicatively connected to the battery pack, and obtain a parameter, such as a temperature, from the battery pack, in real time. The second controller may further be connected to a switch in the electric device, and control the switch in the charging pile to be turned on or off. The second controller may establish a communication connection to the first controller through the charging interface and by using the charging gun, and perform signaling interaction with the first controller. For example, the second controller may perform signaling interaction with the first controller when the battery pack of the electric device has a requirement for charging, heating, or the like.

As an example rather than a limitation, the communication connection between the first controller and the second controller includes an Ethernet (for example, a registered jack (registered jack, RJ) 45 cable or an optical fiber) connection, an industrial serial bus connection (for example, a recommended standard (recommended standard, RS)-485, an RS-232, or a controller area network (controller area network, CAN) bus), and the like. This application includes but is not limited thereto.

It should be understood that a plurality of charging piles shown in FIG. 4 may be deployed in a same charging pile system. Each charging pile in the charging pile system may be connected to a power grid by using an AC-DC conversion module of the charging pile.

In the foregoing charging pile system, the energy storage module of each charging pile may be independent or shared. The first controller of each charging pile may independently control the bidirectional DC-DC conversion module of each charging pile to work in different states, for example, unidirectional working or bidirectional working. In this way, different charging piles in the charging pile system may charge or heat battery packs of different electric devices at the same time, thereby meeting requirements of the different electric devices.

Based on the architecture shown in FIG. 4, this application provides a battery pack heating method. FIG. 5 is a possible schematic flowchart of a battery pack heating method according to an embodiment of this application. A method 500 shown in FIG. 5 may be performed by a charging pile, and may be specifically performed by a controller of the charging pile, for example, the first controller shown in FIG. 4, or may be performed by a component of the controller, for example, a chip, a chip system, or another module that can be configured to implement some or all functions of the controller. This is not limited in this application.

The method 500 shown in FIG. 5 may include step 510 to step 520. The following describes in detail steps in the method 500 by using a first controller as an execution body.

In step 510, the first controller receives a heating request from a second controller.

It should be understood that the heating request may be considered as an example of a first message.

As described above, the first controller is a controller of the charging pile, and the second controller is a controller of an electric device. The second controller may send the heating request to a first charger when a battery pack of the electric device has a heating requirement. The heating request may be used to request to heat the battery pack of the electric device. Correspondingly, the first controller may receive the heating request.

Before a user needs to heat the battery pack, the charging gun of the charging pile needs to be connected to a charging interface of the electric device. The electric device detects a parameter, such as a temperature of the battery pack, in real time. If the temperature of the battery pack is lower than a threshold of a normal operating temperature, the electric device sends a heating request to the charging pile through the charging interface.

In step 520, the first controller controls, based on the received heating request, a bidirectional DC-DC conversion module to work bidirectionally, to enable a current to flow bidirectionally between an energy storage module and the battery pack.

As shown in FIG. 4, the energy storage module is connected in parallel to a direct current bus between the AC-DC conversion module and the bidirectional DC-DC conversion module. One end of the bidirectional DC-DC conversion module is connected to the energy storage module, and the other end is connected to the battery pack by using the charging gun. The bidirectional DC-DC conversion module may control the current to repeatedly flow between the energy storage module and the battery pack at a specific frequency by changing a voltage at both ends.

When the current flows from the battery pack to the energy storage module, high-frequency voltage and current fluctuation may affect the power grid. To prevent this, the first controller may further control the AC-DC conversion module not to work, thereby isolating impact of the high-frequency voltage and current fluctuation on the power grid in a heating process.

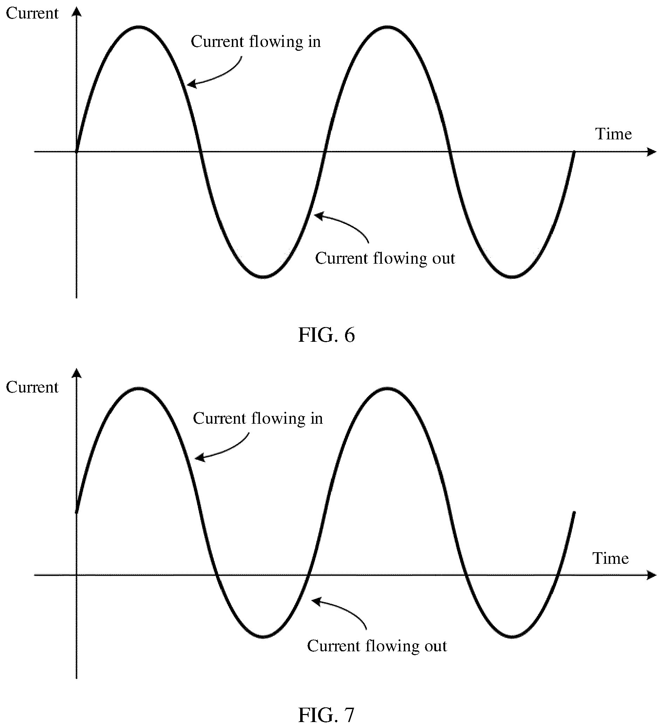

When the battery pack is in a heating state, a current value of the battery pack changes with time, as shown in FIG. 6. A waveform of the current may be approximately a sine waveform. The current repeatedly flows into and out of the battery pack at a specific frequency. Because the battery pack has internal resistance, heat is generated when the current flows into and out of the battery pack. The heat may cause the battery pack to be heated to reach an appropriate operating temperature.

When the temperature of the battery pack is higher than a second preset value, the second controller may send a heating stop request to the first controller. The heating stop request is used to request to stop heating the battery pack. The first controller controls, based on the received heating stop request, the bidirectional DC-DC conversion module to stop working bidirectionally.

It should be understood that the heating stop request may be considered as an example of a fourth message.

There are two possible cases in which the first controller controls the bidirectional DC-DC conversion module to stop working bidirectionally. In one possible case, if the first controller does not receive a charging request or receives a charging stop request, it may be determined that the battery pack currently does not have a charging requirement, and the first controller may control the bidirectional DC-DC conversion module not to work. After that, the current no longer flows into or out of the battery pack. In the other possible case, if the first controller receives the charging request but does not receive the charging stop request, it may be determined that the battery pack currently has a charging requirement, and the first controller may control the bidirectional DC-DC conversion module to work unidirectionally. After that, the current no longer flows from the battery pack to the charging pile.

By using the foregoing method, a battery pack whose operating temperature is lower than a threshold of a normal operating temperature may be heated to an appropriate operating temperature. The foregoing process of heating the battery pack may be separately implemented based on a user requirement, or may be implemented together with the charging process. This is not limited in this application. Table 1 shows working manners of the bidirectional DC-DC conversion module and the AC-DC conversion module in several possible working conditions.

**Table 1**

| Working condition | Working manner |
|---|---|
| Heating only but not charging | The bidirectional DC-DC conversion module works bidirectionally, and the AC-DC conversion module does not work. |
| Not heating but charging only | The bidirectional DC-DC conversion module works unidirectionally, and the AC-DC conversion module works. |
| Charging while heating | The bidirectional DC-DC conversion module works bidirectionally, and the AC-DC conversion module works. |

In a possible case, when the user needs to charge the battery pack of the electric device, the user may choose to heat the battery pack first and then charge the battery pack. To be specific, first choose a working condition in which the battery pack is heated but not charged, and then choose a working condition in which the battery pack is charged but not heated. Alternatively, the user may choose a working condition in which the battery pack is heated and charged.

If the user chooses to perform heating before charging, after the battery pack reaches an appropriate operating temperature of the battery pack, the second controller may send the charging request to the first controller. The charging request is used to request to charge the battery pack. The first controller controls, based on the received charging request, the AC-DC conversion module to work. In addition, the first controller may control the bidirectional DC-DC conversion module to work unidirectionally, to enable the current to flow in a direction of flowing into the battery pack, but not to flow reversely.

When the AC-DC conversion module works, an alternating current on one side of the power grid may be converted into a direct current, and the direct current is output to the bidirectional DC-DC conversion module.

In a possible case, when the first controller receives the charging request, the AC-DC conversion module is in a working state, for example, charging the energy storage module. In this case, the first controller may not need to perform an operation of controlling the AC-DC conversion module to work. In other words, the operation of controlling the AC-DC conversion module to work by the first controller is optional.

It should be understood that if the user does not need to heat the battery pack of a vehicle, but only needs to charge the battery pack, an operation of the charging pile is the same as an operation of the charging pile after the battery pack reaches an appropriate operating temperature.

If the user chooses to charge while heating, higher charging efficiency is obtained. In response to selection of the user, the second controller may send a charging request when sending a heating request. The charging request is used to request to charge the battery pack. The first controller may control, based on the received heating request, the bidirectional DC-DC conversion module to work bidirectionally, and may control, based on the received charging request, the AC-DC conversion module to work.

It should be understood that the charging request and the heating request are only used to distinguish between different functions, and do not constitute a limitation on a quantity of signaling. For example, the charging request and the heating request may be carried in different signaling, or may be carried in same signaling.

In a state of charging while heating, the current flowing into and out of the battery pack changes with time, as shown in FIG. 7. The waveform of the current may be approximately a waveform obtained by translating a sine function upward.

In this state, for the battery pack, a current flows in and out. Heat is generated when the current flows in and out of the battery pack, and the heat may heat the battery pack. In general, a current inflow is greater than a current outflow. Therefore, the battery pack is still charged.

In another possible case, if the user has a requirement for using the electric device, the user may use a reservation service. For example, when the temperature is relatively low, the operating temperature of the battery pack decreases due to impact of the temperature. As a result, performance of the battery pack is reduced, and use experience of the electric device is further affected. Therefore, the user may reserve a heating service based on the time when the electric device is used. That is, a working condition in which only heating is performed but charging is not performed is selected.

For a process of heating the battery pack, refer to the foregoing description. Details are not described herein again.

Different devices use different battery packs, and their parameters are different. For example, a capacity and an operating temperature of a battery pack are different. Therefore, the parameters of different battery packs may be calibrated, so that charging, heating, and the like of the battery pack meet a requirement of the battery pack.

Optionally, the foregoing heating request carries a heating parameter. The heating parameter includes a parameter required for heating the battery pack. For example, the heating parameter includes a first current value required for heating the battery pack. The first current value may be obtained by the electric device through calculation based on the battery pack.

The first controller may determine, based on a capability range of the charging pile, whether the first current value falls within the capability range of the charging pile. If the first current value falls within the capability range of the charging pile, the heating request may be permitted, for example, a permission signal is sent, to notify the second controller that the heating request is permitted. If the first current value does not fall within the capability range of the charging pile, the first controller may also permit the heating request, for example, a permission signal is sent. Optionally, the permission signal may include a second current value supported by the charging pile. This helps the second controller to calculate a temperature rise rate, a heating time, and the like based on the second current value supported by the charging pile. This is not limited in this application.

A message used to carry the permission signal may be a second message. A heating parameter carried in the second message includes the second current value supported by the charging pile.

Optionally, the heating parameter further includes a voltage value and/or a frequency value required for heating the battery pack. Usually, the voltage value and the frequency value required for heating the battery pack fall within a capability range of the charging pile. The first controller may heat the battery pack based on the voltage value and the frequency value that are included in the heating parameter. If the voltage value and the frequency value required for heating the battery pack do not fall within the capability range of the charging pile, the first controller may also send, to the second controller by using the second message, the voltage value and the frequency value that are supported by the charging pile.

Certainly, the charging pile may not indicate the voltage value and the frequency value. The charging pile may charge and discharge the battery pack based on a preset voltage value and a preset frequency value. For example, the voltage value and the frequency value may be a voltage value and a frequency value that are predefined in a standard.

As the time of heating the battery pack increases, the temperature of the battery pack also continuously changes, and a parameter required for heating the battery pack may also change. Therefore, each time a parameter required for heating the battery pack changes, the second controller may send a heating request to the first controller, to notify the first controller of a latest heating parameter. This helps the first controller to adjust, based on the latest received heating request, a parameter used by the charging pile to heat the battery pack. The first controller may also send the permission signal to the second controller in response to each received heating request. A specific process is described above, and details are not described herein again.

After the first controller and the second controller exchange the heating parameter, the first controller and the second controller may continue to work based on the process shown in FIG. 3. Because the specific process is described in detail above, details are not described herein again.

Based on the foregoing method, the charging pile controls the bidirectional DC-DC conversion module to work bidirectionally, to enable the current to repeatedly flow into and out of the battery pack. Because the battery pack has internal resistance, heat is generated when the current flows into and out of the battery pack. The heat may cause the battery pack to be heated to reach an appropriate operating temperature. In this solution, a structure of the electric device does not need to be changed, no new structure needs to be added, and no cost is increased. In addition, the battery pack is heated by using the heat generated when the current flows into and out of the battery pack due to the internal resistance. In this way, heating is relatively uniform, and heating effect is relatively good. Moreover, when the current flows bidirectionally between the battery pack and the charging pile, the energy storage module is used to receive the current from the battery pack and output the current to the battery pack, thereby avoiding impact of a high-frequency current on a power grid.

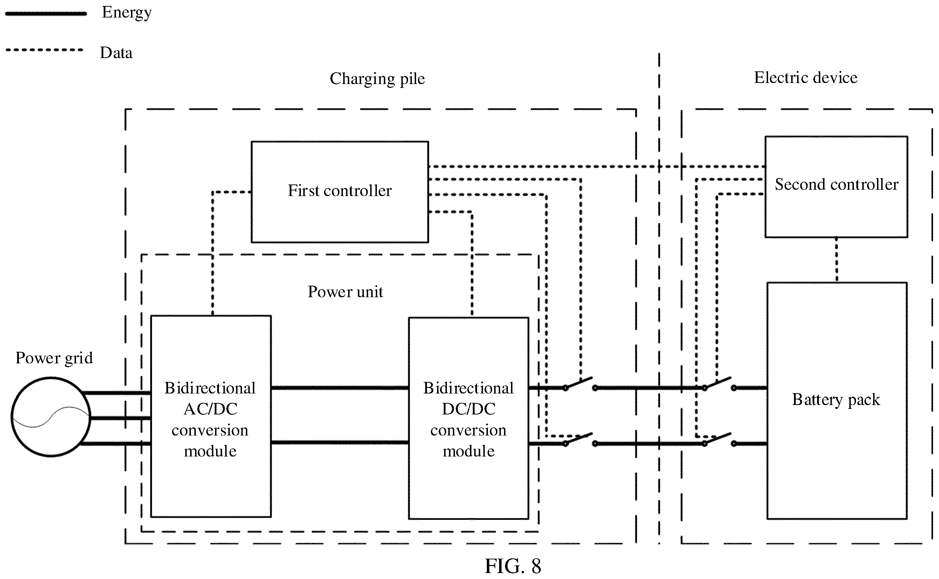

FIG. 8 is a schematic diagram of another possible architecture of a charging pile according to an embodiment of this application. As shown in FIG. 8, the system includes a charging pile and an electric device. The charging pile includes a power unit and a first controller. The power unit includes a bidirectional AC-DC conversion module and a bidirectional DC-DC conversion module. The electric device includes a battery pack and a second controller. The first controller is a module configured to perform a control function in the charging pile. The second controller is a module configured to perform a control function in the electric device.

FIG. 8 is only an example, and does not show all of the charging pile and the electric device. For example, the charging pile and the electric device each further include a charging interface. The charging interface of the charging pile may be connected to a charging gun. The battery pack in the electric device may be connected to the charging interface by using a cable. During charging, a current may flow through the charging gun through the charging interface of the charging pile, then flow into the charging port of the electric device, and flow into the battery pack, thereby charging the electric device. The following describes in detail the modules in FIG. 8 and connection relationships of the modules.

In the charging pile shown in FIG. 8, the bidirectional AC-DC conversion module is connected to a power grid and obtains electric energy from the power grid. When the bidirectional AC-DC conversion module works, an alternating current of the power grid may be converted into a direct current, or a direct current on a direct current bus may be converted into an alternating current. The AC-DC conversion module may be a bidirectional AC-DC conversion module. If the AC-DC conversion module is a bidirectional AC-DC conversion module, in this embodiment, the bidirectional AC-DC conversion module may be kept in a unidirectional working state, to prevent the electric energy from flowing back to the power grid; or may be kept in a bidirectional working state, to enable the electric energy to flow back to the power grid. The bidirectional DC-DC conversion module is connected between the bidirectional AC-DC conversion module and the charging gun. For related descriptions of the bidirectional DC-DC conversion module, refer to the foregoing descriptions with reference to FIG. 4. Details are not described herein again.

The first controller is communicatively connected to the bidirectional DC-DC conversion module and the bidirectional AC-DC conversion module, and may control the bidirectional AC-DC conversion module and the bidirectional DC-DC conversion module to work. In addition, the first controller may establish a communication connection to the second controller by using the charging gun and through the charging interface, and send a request to the second controller.

The first controller may be configured to control each module in the charging pile. In this embodiment, the first controller may be communicatively connected to the bidirectional DC-DC conversion module, and control the bidirectional DC-DC conversion module to switch between unidirectional and bidirectional working. The first controller may also be communicatively connected to the bidirectional AC-DC conversion module, and control the bidirectional AC-DC conversion module to work or not to work. The first controller may also be communicatively connected to a switch in the charging pile, and control the switch in the charging pile to be turned on or off.

In the electric device shown in FIG. 8, the second controller may be configured to control each module in the electric device. For related descriptions of the second controller, refer to the foregoing related descriptions with reference to FIG. 4. Details are not described herein again.

It should be understood that a plurality of charging piles shown in FIG. 8 may be deployed in a same charging pile system. Each charging pile in the charging pile system may be connected to a power grid by using a bidirectional AC-DC conversion module of the charging pile.

In the foregoing charging pile system, the bidirectional AC-DC conversion module of each charging pile may be independent or shared. When the bidirectional AC-DC conversion module of each charging pile is independent of each other, the first controller of each charging pile may independently control the bidirectional AC-DC conversion module of each charging pile to work or not to work. In this way, different charging piles in the charging pile system may charge or heat battery packs of different electric devices at the same time, thereby meeting requirements of the different electric devices.

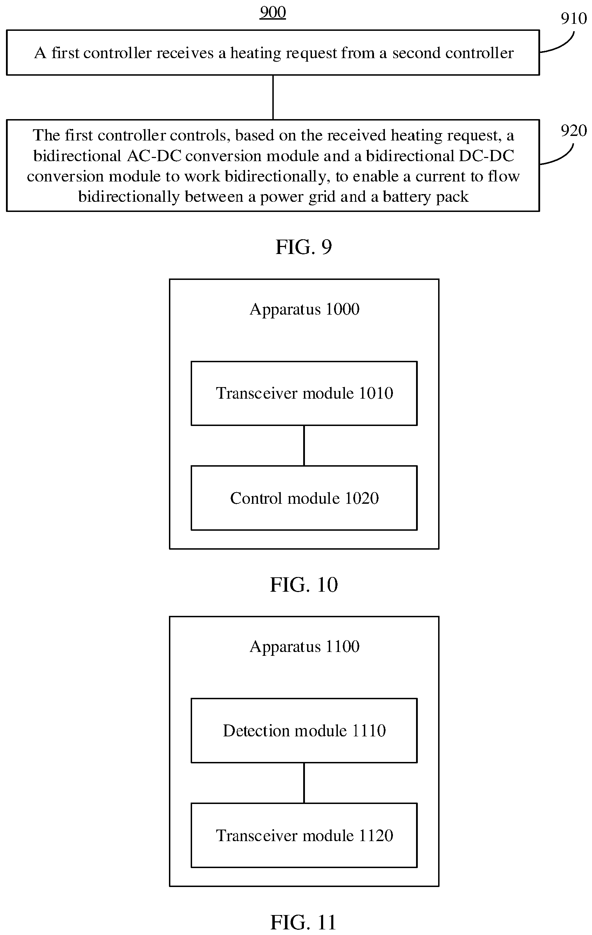

Based on the architecture shown in FIG. 8, this application provides a battery pack heating method. FIG. 9 is another possible schematic flowchart of a battery pack heating method according to an embodiment of this application. A method 900 shown in FIG. 9 may be performed by a charging pile, and may be specifically performed by a controller of the charging pile, for example, the first controller shown in FIG. 8, or may be performed by a component of the controller, for example, a chip, a chip system, or another module that can be configured to implement some or all functions of the controller. This is not limited in this application.

The method 900 shown in FIG. 9 may include step 910 to step 920. The following describes in detail steps in a method 800 by using a first controller as an execution body.

In step 910, the first controller receives a heating request from a second controller.

It should be understood that the heating request may be considered as an example of a first message.

As described above, the first controller is a controller of the charging pile, and the second controller is a controller of an electric device. The second controller may send a heating request to a first charger when the battery pack of the electric device has a heating requirement. The heating request may be used to request to heat the battery pack of the electric device. Correspondingly, the first controller may receive the heating request.

The charging pile shown in FIG. 8 may be configured to heat the battery pack while charging the battery pack, or may be configured to heat the battery pack independently without charging the battery pack. This is not limited in this application. Similar to the method 500, whether the battery pack is heated while being charged or is heated but not charged may be determined based on a user requirement. The second controller may send, based on the user requirement, a charging request while sending the heating request to the first controller, to trigger charging of the battery pack while heating the battery pack; or may send, based on the user requirement, the heating request to the first controller without sending a charging request, to trigger heating of the battery pack separately without charging the battery pack.

To reduce impact of high-frequency voltage and current fluctuation on a power grid, the first controller may heat and charge the battery pack by recommending, to the user, a method of heating the battery pack while charging the battery pack by using the second controller.

In step 920, the first controller controls, based on the received heating request, the bidirectional AC-DC conversion module and the bidirectional DC-DC conversion module to work bidirectionally, to enable a current to flow bidirectionally between the power grid and the battery pack.

As shown in FIG. 8, one end of the bidirectional DC-DC conversion module is connected to the bidirectional AC-DC conversion module through the direct current bus, and the other end is connected to the battery pack by using the charging gun. The bidirectional DC-DC conversion module may control the current to repeatedly flow between the bidirectional AC-DC conversion module and the battery pack at a specific frequency by changing a voltage at both ends. When the current flows from the power grid to the battery pack, the bidirectional AC-DC conversion module may convert an alternating current on one side of the power grid into a direct current and transmit the direct current to one side of the direct current bus. Alternatively, when the current flows from the battery pack to the power grid, a direct current on one side of the direct current bus may be converted into an alternating current and the alternating current is flowed back to one side of the power grid.

When the battery pack is being heated while being charged, a case in which the current flows into and out of the battery pack and changes with time is similar to that shown in FIG. 7. When the battery pack is only being heated but not being charged, a case in which the current flows into and out of the battery pack and changes with time is similar to that shown in FIG. 6. Details are not described herein again.

When a temperature of the battery pack is higher than a second preset value, the second controller may send a heating stop request to the first controller. The heating stop request is used to stop heating the battery pack. The first controller controls, based on the received heating stop request, the bidirectional AC-DC module and the bidirectional DC-DC conversion module to stop working bidirectionally.

It should be understood that the heating stop request may be considered as an example of a fourth message.

There are two possible cases in which the first controller controls the bidirectional AC-DC conversion module and the bidirectional DC-DC module to stop working bidirectionally. In a possible case, if the first controller does not receive a charging request or receives the charging stop request, it may be determined that the battery pack currently does not have a charging requirement, and the first controller may control the bidirectional AC-DC conversion module and the bidirectional DC-DC conversion module not to work. After that, the current no longer flows into or out of the battery pack. In another possible case, if the first controller receives the charging request and does not receive the charging stop request, it may be determined that the battery pack currently has a charging requirement, and the first controller may control the bidirectional AC-DC conversion module and the bidirectional DC-DC conversion module to work unidirectionally. After that, the current no longer flows from the battery pack to the charging pile.

By using the foregoing method, a battery pack whose operating temperature is lower than a threshold of a normal operating temperature may be heated to an appropriate operating temperature. The foregoing process of heating the battery pack may be implemented simultaneously based on a user requirement. If the battery pack is in an appropriate operating temperature, the charging process may also be implemented separately. This is not limited in this application.

Table 2 shows working manners of the bidirectional DC-DC conversion module and the bidirectional AC-DC conversion module in several possible working conditions.

**Table 2**

| Working condition | Working manner |
|---|---|
| Heating only but not charging | The bidirectional DC-DC conversion module works bidirectionally, and the bidirectional AC-DC conversion module works bidirectionally. |
| Not heating but charging only | The bidirectional DC-DC conversion module works unidirectionally, and the bidirectional AC-DC conversion module works unidirectionally. |
| Charging while heating | The bidirectional DC-DC conversion module works bidirectionally, and the bidirectional AC-DC conversion module works bidirectionally. |

Similar to the foregoing heating request, optionally, the heating request carries a heating parameter. The heating parameter includes a parameter required for heating the battery pack. For example, the heating parameter includes a first current value required for heating the battery pack. The first controller may determine, based on a capability of the charging pile, a second current value used for heating the battery pack, and send the second current value to the second controller by using a second message. The second current value is a current value actually used when the charging pile heats the battery pack, and may be less than or equal to the first current value.

Optionally, the heating parameter further includes a voltage value and/or a frequency value required for heating the battery pack. The first controller may also determine, based on the capability of the charging pile, the voltage value and the frequency value used for heating the battery pack, and send the voltage value and the frequency value to the second controller by using the second message.

Similar to the foregoing charging request, optionally, the charging request carries a charging parameter. The charging parameter includes a parameter required for charging the battery pack. For example, the charging parameter includes a voltage value and a current value required for charging the battery pack.

The voltage value required for heating the battery pack may be the same as the voltage value required for charging the battery pack, and the current value required for heating the battery pack is not necessarily the same as the current value required for charging the battery pack. In addition, both the charging parameter and the heating parameter change with time, and the two affect each other and restrict each other.

With reference to Table 2, it can be learned that, in two working conditions of heating only but not charging and heating while charging, working manners of the bidirectional DC-DC conversion module and the bidirectional AC-DC conversion module do not change. However, it may be understood that, in a working condition of heating only but not charging, the bidirectional DC-DC conversion module and the bidirectional AC-DC conversion module need to work based on the heating parameter; and in a working condition of heating while charging, the bidirectional DC-DC conversion module and the bidirectional AC-DC conversion module need to work based on the heating parameter and the charging parameter. Therefore, parameters in the two working conditions may be different. For example, the current values of input or output battery packs are different.

Similar to the method 500, the first controller may determine, based on the received heating parameter and the received charging parameter, whether a parameter value falls within a capability range of the charging pile, and send a permission signal to the second controller, to respond to the heating request and the charging request of the second controller. For brevity, details are not described herein again.

Based on the foregoing method, the charging pile controls the bidirectional AC-DC conversion module to work bidirectionally and the bidirectional DC-DC conversion module to work bidirectionally, to enable the current to repeatedly flow into and out of the battery pack. Because the battery pack has internal resistance, heat is generated when the current flows into and out of the battery pack. The heat may cause the battery pack to be heated to reach an appropriate operating temperature. In this solution, a structure of the electric device does not need to be changed, no new structure needs to be added, and no cost is increased. In addition, the battery pack is heated by using the heat generated when the current flows into and out of the battery pack due to the internal resistance. In this way, heating is relatively uniform, and heating effect is relatively good.

FIG. 10 is a schematic block diagram of an apparatus for heating a battery pack according to an embodiment of this application. As shown in FIG. 10, an apparatus 1000 includes a transceiver module 1010 and a control module 1020.

The apparatus is configured to implement a function of the charging pile in the method embodiment shown in FIG. 3, or a function of the first controller in the method embodiment shown in FIG. 5 or FIG. 9.

For example, when the apparatus 1000 is configured to implement the function of the charging pile in the method embodiment shown in FIG. 3, the transceiver module 1010 is configured to receive a first message from an electric device, where the first message carries a first current value required for heating a battery pack of the electric device. The control module 1020 is configured to control a power unit to charge and discharge the battery pack based on the first current value. A second current value output when the power unit heats the battery pack is not greater than the first current value.

The apparatus 1000 is configured to perform the procedures in the method embodiment shown in FIG. 3, FIG. 5, or FIG. 9. For details, refer to the foregoing related descriptions. For brevity, details are not described herein again.

In another possible design, the apparatus is configured to implement a function of the electric device in the method embodiment shown in FIG. 3, or a function of the second controller in the method embodiment shown in FIG. 5 or FIG. 9.

FIG. 11 is a schematic block diagram of another apparatus for heating a battery pack according to an embodiment of this application. As shown in FIG. 11, an apparatus 1100 includes a detection module 1110 and a transceiver module 1120.

For example, when an apparatus 1000 is configured to implement a function of the electric device in the method embodiment shown in FIG. 3, the detection module 1110 is configured to detect a temperature of a battery pack. The transceiver module 1120 is configured to send a first message to a charging pile. The first message carries a current value required for heating the battery pack.

For procedures in which the apparatus 1100 is configured to perform the method in FIG. 3, FIG. 5, or FIG. 9, refer to the foregoing related descriptions. For brevity, details are not described herein again.

It should be understood that module division in this embodiment of this application is an example, and is only logical function division. In actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

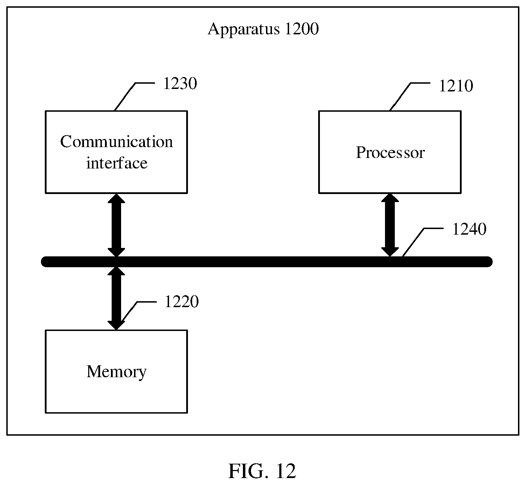

FIG. 12 is another schematic block diagram of an apparatus for heating a battery pack according to an embodiment of this application. As shown in FIG. 12, an apparatus 1200 includes at least one processor 1210, and is configured to implement a function of the charging pile or a function of the first controller in the foregoing method embodiments, or is configured to implement a function of the electric device or a function of the second controller in the foregoing method embodiments. For details, refer to the detailed descriptions in the method examples. Details are not described herein again.

The apparatus 1200 further includes at least one memory 1220, configured to store program instructions and/or data. The memory 1220 is coupled to the processor 1210. The coupling in this application may be an indirect coupling or a communication connection between apparatuses, units, or modules in an electrical form, a mechanical form, or another form, and is used for information exchange between the apparatuses, the units, or the modules. The processor 1210 may collaboratively operate with the memory 1220. The processor 1210 may execute the program instructions stored in the memory 1220. At least one of the at least one memory may be included in the processor.

The apparatus 1200 further includes a communication interface 1230, configured to communicate with another device through a transmission medium. This helps an apparatus in the apparatus 1200 to communicate with the another device. The communication interface 1230 may be, for example, a transceiver, an interface, a bus, a circuit, or an apparatus that can implement receiving and sending functions. The processor 1210 may receive and send data and/or information through the communication interface 1230, and is configured to implement the battery pack heating method in the embodiment corresponding to FIG. 5 or FIG. 9.

A specific connection medium between the processor 1210, the memory 1220, and the communication interface 1230 is not limited in this application. In this application, in FIG. 12, the processor 1210, the memory 1220, and the communication interface 1230 are connected through a bus 1240. The bus 1240 is represented by using a thick line in FIG. 12, and a connection manner between other components is only described as an example, and is not limited thereto. The bus may be classified into an address bus, a data bus, a control bus, and the like. For ease of representation, only one bold line is used in FIG. 12 to represent the bus. However, it does not indicate that there is only one bus or only one type of bus.

In this embodiment of this application, the processor may be a general-purpose processor, a digital signal processor, an application-specific integrated circuit, a field programmable gate array or another programmable logic device, a discrete gate or a transistor logic device, or a discrete hardware component, and may implement or perform the methods, steps, and logical block diagrams disclosed in this application. The general-purpose processor may be a microprocessor or any conventional processor or the like. The steps of the methods disclosed with reference to this application may be directly performed and completed by a hardware processor, or may be performed and completed by using a combination of hardware in the processor and a software module.

Based on the methods provided in this application, this application further provides a computer-readable storage medium. The computer-readable storage medium stores program code. When the program code is run on a computer, the computer is enabled to perform the battery pack heating method in the embodiment corresponding to FIG. 3, FIG. 5, or FIG. 9.

Based on the methods provided in this application, this application further provides a computer program product. The computer program product includes computer program code. When the computer program code is run on a computer, the computer is enabled to perform the battery pack heating method in the embodiment corresponding to FIG. 3, FIG. 5, or FIG. 9.

All or a part of the technical solutions provided in this application may be implemented by using software, hardware, firmware, or any combination thereof. When software is used for implementation, all or some of embodiments may be implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, a network device, a terminal device, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device such as a server or a data center, integrating one or more usable media. The usable media may be a magnetic medium (for example, a floppy disk, a hard disk, or a magnetic tape), an optical medium such as a digital video disc (digital video disc, DVD), a semiconductor medium, or the like.

The foregoing descriptions are only specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A charging pile (110), comprising a power unit and a charging gun (1101), wherein the charging gun (1101) is configured to connect the power unit and an electric device (120), a first switch is connected between the power unit and the charging gun (1101), and a second switch is connected between the battery pack (1201) in the electric device (120) and the charging pile (110); and
the charging pile (110) is configured to:
receive a first message from the electric device (120), wherein the first message carries a first current value required for heating a battery pack (1201) of the electric device (120); and
control the power unit to charge and discharge the battery pack (1201) based on the first current value, wherein a second current value output when the power unit charges the battery pack (1201) is not greater than the first current value; and
before controlling the power unit to charge and discharge the battery pack (1201) based on the first current value, the charging pile (110) is further configured to:
receive a third message from the electric device (120), wherein the third message indicates that the second switch is turned on; and
control the first switch to be turned on.

2. The charging pile according to claim 1, wherein the charging pile (110) is further configured to: after receiving the first message, send a second message to the electric device (120), wherein the second message carries the second current value.

3. The charging pile according to claim 1 or 2, wherein the first message further carries a voltage value and/or a frequency value required for heating the battery pack (1201), wherein the voltage value indicates a voltage at which the charging pile (110) charges the battery pack (1201), and the frequency value indicates a frequency at which the charging pile (110) and the battery pack (1201) switch between charging and discharging.

4. The charging pile according to any one of claims 1 to 3, wherein after controlling the power unit to charge and discharge the battery pack (1201) based on the first current value, the charging pile (110) is further configured to:
receive a fourth message from the electric device (120), wherein the fourth message is used to request to stop heating the battery pack (1201); and
control the power unit to stop charging and discharging the battery pack (1201).

5. The charging pile according to any one of claims 1 to 4, wherein when configured to control the power unit to stop charging and discharging the battery pack (1201), the charging pile (110) is specifically configured to:
when the electric device (120) has a charging requirement, control the power unit to charge the battery pack (1201); or
when the electric device (120) does not have the charging requirement, control the power unit to stop working.

6. A charging system, comprising a charging pile (110) and an electric device (120), wherein the charging pile (110) comprises a power unit and a charging gun (1101), a first switch is connected between the power unit and the charging gun (1101), the charging gun (1101) is configured to connect the power unit and the electric device (120), the electric device (120) comprises a battery pack (1201), the battery pack (1201) is configured to supply electric energy to the electric device (120), and a second switch is connected between the battery pack (1201) in the electric device (120) and the charging pile (110), wherein
the electric device (120) is configured to detect that a temperature of the battery pack (1201) is lower than a first preset value and send a first message to the charging pile (110), wherein the first message carries a first current value required for heating the battery pack (1201);
the charging pile (110) is configured to control, based on the first message, the power unit to charge and discharge the battery pack (1201), wherein a second current value output when the power unit charges the battery pack (1201) is not greater than the first current value, and to send a second message to the electric device (120), wherein the second message carries the second current value; and
the electric device (120) is further configured to: after receiving the second message, control the second switch to be turned on, and send a third message to the charging pile (110), wherein the third message indicates that the second switch is tuned on; and
the charging pile (110) is further configured to control, based on the received third message, the first switch to be turned on.

7. The system according to claim 6, wherein the first message further carries a voltage value and/or a frequency value required for heating the battery pack (1201), wherein the voltage value indicates a voltage output when the charging pile (110) charges the battery pack (1201), and the frequency value indicates a frequency at which the charging pile (110) and the battery pack (1201) switch between charging and discharging.

8. A battery pack heating method, applied to a charging pile, wherein the charging pile comprises a power unit and a charging gun (1101), wherein the charging gun (1101) is configured to connect the power unit and an electric device (120), a first switch is connected between the power unit and the charging gun (1101), and a second switch is connected between the battery pack (1201) in the electric device (120) and the charging pile (110); and the method comprises:
receiving a first message from the electric device (120), wherein the first message carries a first current value required for heating a battery pack (1201) of the electric device (120); and
controlling the power unit to charge and discharge the battery pack (1201) based on the first current value, wherein a second current value output when the power unit charges the battery pack (1201) is not greater than the first current value;
before controlling the power unit to charge and discharge the battery pack (1201) based on the first current value, receiving a third message from the electric device (120), wherein the third message indicates that the second switch is turned on, and controlling the first switch to be turned on.

9. A computer program product, including a computer program, which when the computer program is run on a charging pile, the method according to claim 8 is implemented.

10. A computer-readable storage medium, including a computer program, wherein when the computer program is run on a charging pile, the method according to claim 8 is implemented,

## Patentansprüche

1. Ladesäule (110), umfassend eine Leistungseinheit und eine Ladekanone (1101), wobei die Ladekanone (1101) dazu konfiguriert ist, die Leistungseinheit und eine elektrische Vorrichtung (120) zu verbinden, ein erster Schalter zwischen der Leistungseinheit und der Ladekanone (1101) verbunden ist und ein zweiter Schalter zwischen dem Batteriepack (1201) in der elektrischen Vorrichtung (120) und der Ladesäule (110) verbunden ist; und
die Ladesäule (110) zu Folgendem konfiguriert ist:
Empfangen einer ersten Nachricht von der elektrischen Vorrichtung (120), wobei die erste Nachricht einen ersten Stromwert enthält, der zum Erwärmen eines Batteriepacks (1201) der elektrischen Vorrichtung (120) erforderlich ist; und
Steuern der Leistungseinheit, um das Batteriepack (1201) basierend auf dem ersten Stromwert zu laden und zu entladen, wobei ein zweiter Stromwert, der ausgegeben wird, wenn die Leistungseinheit das Batteriepack (1201) lädt, nicht größer als der erste Stromwert ist; und
vor dem Steuern der Leistungseinheit, um das Batteriepack (1201) basierend auf dem ersten Stromwert zu laden und zu entladen, die Ladesäule (110) ferner zu Folgendem konfiguriert ist:
Empfangen einer dritten Nachricht von der elektrischen Vorrichtung (120), wobei die dritte Nachricht angibt, dass der zweite Schalter eingeschaltet ist; und
Steuern des ersten Schalters, um eingeschaltet zu werden.

2. Ladesäule nach Anspruch 1, wobei die Ladesäule (110) ferner zu Folgendem konfiguriert ist: nach dem Empfangen der ersten Nachricht Senden einer zweiten Nachricht an die elektrische Vorrichtung (120), wobei die zweite Nachricht den zweiten Stromwert enthält.

3. Ladesäule nach Anspruch 1 oder 2, wobei die erste Nachricht ferner einen Spannungswert und/oder einen Frequenzwert enthält, die zum Erwärmen des Batteriepacks (1201) erforderlich sind, wobei der Spannungswert eine Spannung angibt, bei der die Ladesäule (110) das Batteriepack (1201) lädt, und der Frequenzwert eine Frequenz angibt, bei der die Ladesäule (110) und das Batteriepack (1201) zwischen Laden und Entladen umschalten.

4. Ladesäule nach einem der Ansprüche 1 bis 3, wobei die Ladesäule (110) nach dem Steuern der Leistungseinheit, um das Batteriepack (1201) basierend auf dem ersten Stromwert zu laden und zu entladen, ferner zu Folgendem konfiguriert ist:
Empfangen einer vierten Nachricht von der elektrischen Vorrichtung (120), wobei die vierte Nachricht dazu verwendet wird, anzufordern, das Erwärmen des Batteriepacks (1201) zu stoppen; und
Steuern der Leistungseinheit, um das Laden und Entladen des Batteriepacks (1201) zu stoppen.

5. Ladesäule nach einem der Ansprüche 1 bis 4, wobei die Ladesäule (110), wenn sie dazu konfiguriert ist, die Leistungseinheit zu steuern, um das Laden und Entladen des Batteriepacks (1201) zu stoppen, speziell zu Folgendem konfiguriert ist:
wenn die elektrische Vorrichtung (120) einen Ladebedarf aufweist, Steuern der Leistungseinheit, um das Batteriepack (1201) zu laden; oder
wenn die elektrische Vorrichtung (120) den Ladebedarf nicht aufweist, Steuern der Leistungseinheit, um mit Arbeiten zu stoppen.

6. Ladesystem, umfassend eine Ladesäule (110) und eine elektrische Vorrichtung (120), wobei die Ladesäule (110) eine Leistungseinheit und eine Ladekanone (1101) umfasst, ein erster Schalter zwischen der Leistungseinheit und der Ladekanone (1101) verbunden ist, die Ladekanone (1101) dazu konfiguriert ist, die Leistungseinheit mit der elektrischen Vorrichtung (120) zu verbinden, die elektrische Vorrichtung (120) ein Batteriepack (1201) umfasst, das Batteriepack (1201) dazu konfiguriert ist, die elektrische Vorrichtung (120) mit elektrischer Energie zu versorgen, und ein zweiter Schalter zwischen dem Batteriepack (1201) in der elektrischen Vorrichtung (120) und der Ladesäule (110) verbunden ist, wobei
die elektrische Vorrichtung (120) dazu konfiguriert ist, zu detektieren, dass eine Temperatur des Batteriepacks (1201) niedriger als ein erster voreingestellter Wert ist, und eine erste Nachricht an die Ladesäule (110) zu senden, wobei die erste Nachricht einen ersten Stromwert enthält, der zum Erwärmen des Batteriepacks (1201) erforderlich ist;
die Ladesäule (110) dazu konfiguriert ist, basierend auf der ersten Nachricht die Leistungseinheit zu steuern, um das Batteriepack (1201) zu laden und zu entladen, wobei ein zweiter Stromwert, der ausgegeben wird, wenn die Leistungseinheit das Batteriepack (1201) lädt, nicht größer als der erste Stromwert ist, und eine zweite Nachricht an die elektrische Vorrichtung (120) zu senden, wobei die zweite Nachricht den zweiten Stromwert enthält; und
die elektrische Vorrichtung (120) ferner zu Folgendem konfiguriert ist: nach Empfangen der zweiten Nachricht Steuern des zweiten Schalters, um eingeschaltet zu werden, und Senden einer dritten Nachricht an die Ladesäule (110), wobei die dritte Nachricht angibt, dass der zweite Schalter eingeschaltet ist; und
die Ladesäule (110) ferner dazu konfiguriert ist, basierend auf der empfangenen dritten Nachricht den ersten Schalter zu steuern, um eingeschaltet zu werden.

7. System nach Anspruch 6, wobei die erste Nachricht ferner einen Spannungswert und/oder einen Frequenzwert enthält, die zum Erwärmen des Batteriepacks (1201) erforderlich sind, wobei der Spannungswert eine Spannung angibt, die ausgegeben wird, wenn die Ladesäule (110) das Batteriepack (1201) lädt, und der Frequenzwert eine Frequenz angibt, bei der die Ladesäule (110) und das Batteriepack (1201) zwischen Laden und Entladen umschalten.

8. Verfahren zum Erwärmen eines Batteriepacks, das auf eine Ladesäule angewandt wird, wobei die Ladesäule eine Leistungseinheit und eine Ladekanone (1101) umfasst, wobei die Ladekanone (1101) dazu konfiguriert ist, die Leistungseinheit und eine elektrische Vorrichtung (120) zu verbinden, ein erster Schalter zwischen der Leistungseinheit und der Ladekanone (1101) verbunden ist und ein zweiter Schalter zwischen dem Batteriepack (1201) in der elektrischen Vorrichtung (120) und der Ladesäule (110) verbunden ist; und das Verfahren Folgendes umfasst:
Empfangen einer ersten Nachricht von der elektrischen Vorrichtung (120), wobei die erste Nachricht einen ersten Stromwert enthält, der zum Erwärmen eines Batteriepacks (1201) der elektrischen Vorrichtung (120) erforderlich ist; und
Steuern der Leistungseinheit, um das Batteriepack (1201) basierend auf dem ersten Stromwert zu laden und zu entladen, wobei ein zweiter Stromwert, der ausgegeben wird, wenn die Leistungseinheit das Batteriepack (1201) lädt, nicht größer als der erste Stromwert ist;
vor dem Steuern der Leistungseinheit, um das Batteriepack (1201) basierend auf dem ersten Stromwert zu laden und zu entladen, Empfangen einer dritten Nachricht von der elektrischen Vorrichtung (120), wobei die dritte Nachricht angibt, dass der zweite Schalter eingeschaltet ist, und Steuern des ersten Schalters, um eingeschaltet zu werden.

9. Computerprogrammprodukt, beinhaltend ein Computerprogramm, wobei, wenn das Computerprogramm auf einer Ladesäule ausgeführt wird, das Verfahren nach Anspruch 8 umgesetzt wird.

10. Computerlesbares Speichermedium, beinhaltend ein Computerprogramm, wobei, wenn das Computerprogramm auf einer Ladesäule ausgeführt wird, das Verfahren nach Anspruch 8 umgesetzt wird.

## Revendications

1. Pile de charge (110) comprenant une unité d'alimentation et un pistolet de charge (1101), dans laquelle le pistolet de charge (1101) est configuré pour connecter l'unité d'alimentation et le dispositif électrique (120), un premier commutateur est connecté entre l'unité d'alimentation et le pistolet de charge (1101), et un second commutateur est connecté entre le bloc batterie (1201) du dispositif électrique (120) et la pile de charge (110) ; et
la pile de charge (110) est configurée pour :
recevoir un premier message du dispositif électrique (120), dans laquelle le premier message transporte une première valeur de courant requise pour chauffer un bloc batterie (1201) du dispositif électrique (120) ; et
commander l'unité d'alimentation pour charger et décharger le bloc batterie (1201) sur la base de la première valeur de courant, dans laquelle une seconde valeur de courant délivrée lorsque l'unité d'alimentation charge le bloc batterie (1201) n'est pas supérieure à la première valeur de courant ; et
avant de commander l'unité d'alimentation pour charger et décharger le bloc batterie (1201) sur la base de la première valeur de courant, la pile de charge (110) est également configurée pour :
recevoir un troisième message du dispositif électrique (120), dans laquelle le troisième message indique que le second commutateur est allumé ; et
commander le premier commutateur à allumer.

2. Pile de charge selon la revendication 1, dans laquelle la pile de charge (110) est également configurée pour : après réception du premier message, envoyer un deuxième message au dispositif électrique (120), dans laquelle le deuxième message transporte la seconde valeur de courant.

3. Pile de charge selon la revendication 1 ou 2, dans laquelle le premier message transporte également une valeur de tension et/ou une valeur de fréquence requise pour chauffer le bloc batterie (1201), dans laquelle la valeur de tension indique une tension à laquelle la pile de charge (110) charge le bloc batterie (1201), et la valeur de fréquence indiquant une fréquence à laquelle la pile de charge (110) et le bloc batterie (1201) commutent entre la charge et la décharge.

4. Pile de charge selon l'une quelconque des revendications 1 à 3, dans laquelle, après avoir commandé l'unité d'alimentation pour charger et décharger le bloc batterie (1201) sur la base de la première valeur de courant, la pile de charge (110) est également configurée pour :
recevoir un quatrième message du dispositif électrique (120), dans laquelle le quatrième message est utilisé pour demander l'arrêt du chauffage du bloc batterie (1201) ; et
commander l'unité d'alimentation pour arrêter la charge et la décharge du bloc batterie (1201).

5. Pile de charge selon l'une quelconque des revendications 1 à 4, dans laquelle, lorsqu'elle est configurée pour commander l'arrêt de la charge et de la décharge du bloc batterie (1201) par l'unité d'alimentation, la pile de charge (110) est spécifiquement configurée pour :
lorsque le dispositif électrique (120) a besoin d'être chargé, commander l'unité d'alimentation pour charger le bloc batterie (1201) ; ou
lorsque le dispositif électrique (120) n'a pas besoin d'être chargé, commander à l'unité d'alimentation d'arrêter de fonctionner.

6. Système de charge, comprenant une pile de charge (110) et un dispositif électrique (120), dans lequel la pile de charge (110) comprend une unité d'alimentation et un pistolet de charge (1101), un premier commutateur est connecté entre l'unité d'alimentation et le pistolet de charge (1101), le pistolet de charge (1101) est configuré pour connecter l'unité d'alimentation et le dispositif électrique (120), le dispositif électrique (120) comprend un bloc batterie (1201), le bloc batterie (1201) est configuré pour alimenter en énergie électrique le dispositif électrique (120), et un second commutateur est connecté entre le bloc batterie (1201) dans le dispositif électrique (120) et la pile de charge (110), dans lequel
le dispositif électrique (120) est configuré pour détecter qu'une température du bloc batterie (1201) est inférieure à une première valeur prédéfinie et envoyer un premier message à la pile de charge (110), dans lequel le premier message transporte une première valeur de courant requise pour chauffer le bloc batterie (1201) ;
la pile de charge (110) est configurée pour commander, sur la base du premier message, l'unité d'alimentation pour charger et décharger le bloc batterie (1201), dans lequel une seconde valeur de courant délivrée lorsque l'unité d'alimentation charge le bloc batterie (1201) n'est pas supérieure à la première valeur de courant, et pour envoyer un deuxième message au dispositif électrique (120), dans lequel le deuxième message transporte la seconde valeur de courant ; et
le dispositif électrique (120) est également configuré pour :
après avoir reçu le deuxième message, commander le second commutateur à allumer, et envoyer un troisième message à la pile de charge (110), dans lequel le troisième message indique que le second commutateur est allumé ; et
la pile de charge (110) est également configurée pour commander, sur la base du troisième message reçu, le premier commutateur à allumer.

7. Système selon la revendication 6, dans lequel le premier message transporte également une valeur de tension et/ou une valeur de fréquence requise pour chauffer le bloc batterie (1201), dans lequel la valeur de tension indique une sortie de tension lorsque la pile de charge (110) charge le bloc batterie (1201), et la valeur de fréquence indique une fréquence à laquelle la pile de charge (110) et le bloc batterie (1201) commutent entre la charge et la décharge.

8. Procédé de chauffage de bloc batterie, appliqué à une pile de charge, dans lequel la pile de charge comprend une unité d'alimentation et un pistolet de charge (1101), dans lequel le pistolet de charge (1101) est configuré pour connecter l'unité d'alimentation et le dispositif électrique (120), un premier commutateur est connecté entre l'unité d'alimentation et le pistolet de charge (1101), et un second commutateur est connecté entre le bloc batterie (1201) du dispositif électrique (120) et la pile de charge (110) ; et le procédé comprend :
la réception d'un premier message du dispositif électrique (120), dans lequel le premier message contient une première valeur de courant requise pour chauffer un bloc batterie (1201) du dispositif électrique (120) ; et
la commande de l'unité d'alimentation pour charger et décharger le bloc batterie (1201) sur la base de la première valeur de courant, dans lequel une seconde valeur de courant délivrée lorsque l'unité d'alimentation charge le bloc batterie (1201) n'étant pas supérieure à la première valeur de courant ;
avant de commander l'unité d'alimentation pour charger et décharger le bloc batterie (1201) sur la base de la première valeur de courant, la réception d'un troisième message du dispositif électrique (120), dans lequel le troisième message indique que le second commutateur est allumé, et la commande du premier commutateur à allumer.

9. Produit de programme informatique, comportant un programme informatique, qui lorsque le programme informatique est exécuté sur une pile de charge, le procédé selon la revendication 8 est mis en œuvre.

10. Support de stockage lisible par ordinateur, comportant un programme informatique, dans lequel lorsque le programme informatique est exécuté sur une pile de charge, le procédé selon la revendication 8 est mis en œuvre,
